# EUROPÄISCHE PATENTSCHRIFT

(11) **EP 4 334 789 B1**
(45) Veröffentlichungstag und Bekanntmachung des Hinweises auf die Patenterteilung: **07.10.2026**
(21) Anmeldenummer: 22728395.9
(22) Anmeldetag: 06.05.2022
(51) Int. Cl.: G05B 19/418, B65G 1/00

(54) **FÖRDERVORRICHTUNG**
CONVEYOR DEVICE
DISPOSITIF DE MANUTENTION

(30) Priorität: 07.05.2021 DE 102021111944
(43) Veröffentlichungstag der Anmeldung: 13.03.2024
(73) Patentinhaber: Interroll Holding AG, 6592 Sant' Antonino (CH)
(72) Erfinder: HAMPE, Andreas, 41836 Hückelhoven (DE)
(74) Vertreter: Kohlhof, Stephan
(86) Internationale Anmeldenummer: PCT/EP2022/062351
(87) Internationale Veröffentlichungsnummer: WO 2022/234124

(56) Entgegenhaltungen:
- DE-A1- 102015 107 167
- DE-B4- 102004 038 135
- US-A1- 2004 075 405
- US-A1- 2015 151 921
- US-B1- 6 471 039
- US-B1- 7 756 603
- US-B2- 10 889 451
- US-B2- 7 631 747

## Beschreibung

Die Erfindung betrifft eine Fördervorrichtung zur Förderung von Fördergütern entlang einer Förderstrecke.

Fördervorrichtungen dieser Art werden für verschiedene intralogistische Anwendungen zur Förderung von Waren oder sonstigen Fördergütern eingesetzt. Ein anderer Anwendungsbereich solcher Fördervorrichtungen ist die Förderung von Bauteilen und zu montierenden Produkten in einer Fertigungseinrichtung und die Zulieferung von Bauteilen zu Fertigungsstationen darin.

Zur effizienten Förderung sind die Förderstrecken in solchen Fördervorrichtungen in mehrere Teileinheiten unterteilt, sogenannte Förderzonen. Jede Förderzone weist einen Förderantrieb auf, der individuell angesteuert werden kann und dadurch die Fördergeschwindigkeit eines Förderguts in dieser Förderzone bestimmt. Ein Förderantrieb kann dabei beispielsweise durch eine Förderrolle mit integriertem Motor gebildet werden, auf welcher das Fördergut direkt aufliegt und durch die Förderrolle in Bewegung versetzt wird. Ein Förderantrieb kann auch durch einen Antriebsmotor, der ein Förderband antreibt, gebildet werden. Eine Förderzone ist definiert als ein Bereich, der durch einen solchen Förderantrieb angetrieben wird und in dem ein Fördergut dann durch diesen Förderantrieb gefördert wird. Dieser Bereich kann verschieden groß sein, beispielsweise kann der Bereich die Erstreckung eines Endlosförderbands, das durch einen Förderbandantrieb angetrieben wird, umfassen oder es ist ein Bereich, der durch eine motorbetriebene Förderrolle, gegebenenfalls ergänzt durch von dieser motorbetriebenen Förderrolle durch Treibriemen angetriebene Leerlaufrollen, abgedeckt wird. Eine Förderzone kann auch mehrere, synchron betriebene Förderantriebe aufweisen, um eine höhere Förderkraft auf ein in der Förderzone befindliches Fördergut aufzubringen.

Zur effizienten Förderung von Fördergütern entlang einer solchen Förderstrecke mit einer hohen Durchsatzrate sind grundsätzlich zwei unterschiedliche Fördermodi bekannt. Einerseits kann die Förderstrecke im sogenannten Einzelplatzabzugsmodus betrieben werden. Beim Einzelplatzabzugsmodus wird ein Fördergut aus einer Förderzone in die hierzu stromabwärts liegende Förderzone gefördert, wenn diese stromabwärts liegende Förderzone frei ist. Im Einzelplatzabzugsmodus ergibt sich daher ein in der Regel zeitversetztes Ingangsetzen der Fördergüter in den einzelnen Förderzonen, da stets durch eine abgeschlossene Weiterförderung eines Förderguts aus einer Förderzone die stromaufwärts hierzu liegende Förderzone ihr Fördergut ebenfalls weiterfördern kann.

Zum anderen kann die Förderstrecke im sogenannten Blockabzugsmodus betrieben werden. Beim Blockabzugsmodus werden alle Förderzonen gleichzeitig in Gang gesetzt, so dass sich die darin befindlichen Fördergüter synchron in die jeweils stromabwärts liegende Förderzone bewegen. Der Blockabzugsmodus kann grundsätzlich einen konstanteren Betrieb der Förderantriebe erreichen als der Einzelplatzabzug. Allerdings ist sowohl beim Einzelplatzabzug als auch beim Blockabzug oftmals eine Korrektur durch temporäres Verzögern einzelner Fördergüter notwendig, da die Fördergüter nicht zwangsläufig alle synchron beschleunigt und abgebremst werden können. Dies tritt insbesondere auf, wenn entlang der Förderstrecke mehrere Fördergüter mit unterschiedlichem Gewicht oder unterschiedlichen Abmessungen gefördert werden und führt zu einer zusätzlichen Belastung der Förderantriebe.

Um die Steuerung von Förderantrieben entsprechend zu gestalten, ist es bekannt, Förderantriebe mit entsprechenden Steuerungseinheiten zu verbinden. Dabei kann jeweils eine Steuerungseinheit einen einzelnen Förderantrieb steuern. Es können aber auch Steuerungseinheiten vorgesehen sein, an die mehrere Förderantriebe angeschlossen werden können und diese entsprechend mehreren Förderantriebe, beispielsweise zwei oder vier Förderantriebe, individuell steuern. Die Steuerungseinheit kann auch als zentrale Steuerungseinheit zur Ansteuerung sämtlicher Förderantriebe oder einer größeren Menge der Förderantriebe in der Fördervorrichtung ausgebildet sein. Hierbei können in der zentralen Steuerung entsprechende virtuelle Steuerungseinheiten für ein, zwei oder mehrere Förderantriebe vorgesehen sein, die wiederum untereinander in der zentralen Steuerung kommunizieren.

Eine Kommunikation der Steuerungseinheiten untereinander ist einerseits deshalb von Bedeutung, weil hierdurch die Steuerungseinheiten untereinander Signale austauschen können, die beispielsweise signalisieren, ob eine stromaufwärts oder stromabwärts liegende Förderzone gerade fördert oder stillsteht. Weiterhin können an die Steuerungseinheiten Sensoren angeschlossen werden, welche Informationen aus der jeweiligen Förderzone an die Steuerungseinheit signalisieren. Typischerweise kann ein solcher Sensor beispielsweise eine Lichtschranke sein, die quer zur Förderrichtung misst und die den Anfang oder das Ende eines Förderguts erfassen kann und hieraus die Länge, die Geschwindigkeit und/oder die Position des Förderguts ermitteln kann. Die Signale solcher Sensoren werden ebenfalls an die Steuerungseinheit übermittelt und können zur Steuerung des Förderantriebs in der jeweiligen Förderzone des Sensors dienen oder zur Steuerung eines Förderantriebs in einer nachfolgenden oder vorhergehenden Förderzone dienen.

Grundsätzlich ist es erwünscht, eine möglichst hohe Durchsatzrate an Fördergütern pro Zeiteinheit durch eine solche Förderstrecke transportieren zu können. Dabei muss jedoch sichergestellt sein, dass eine sogenannte staudrucklose Förderung stattfindet, also eine Förderung, bei der die Fördergüter nicht in Kontakt miteinander treten, da sich ein solcher Kontakt durch Verstärkung der Förderkräfte so auswirken kann, dass ein weit stromabwärts liegendes Fördergut hierdurch aufgrund der Addition der Förderkräfte beschädigt wird. Die staudrucklose Förderung ist im Einzelplatzabzugsmodus und Blockabzugsmodus erreichbar, wobei bestimmte Sicherheitsabstände zwischen den Fördergütern eingehalten werden müssen, da sich oftmals aufgrund einer entsprechenden einfachen Sensorbestückung in jeder Förderzone ein Abstand zwischen den Fördergütern einstellt, welcher der Länge der Förderzone abzüglich der Länge des Förderguts entspricht. Durch das Zusammenspiel von Sensor und Antriebssteuerung des Förderantriebs durch die Steuerungseinheit kann eine zuverlässige staudrucklose Förderung auch bei hohen Fördergeschwindigkeiten erreicht werden. Jedoch ist der erreichbare Durchsatz durch die Förderstrecke aufgrund der einzuhaltenden Sicherheitsabstände, die nicht beliebig verkleinert werden können, noch nicht optimal.

Die US 2004/075405 A1 (auch veröffentlicht als DE 102 36 170 A1) offenbart einen lastabhängigen Asynchronantrieb für eine Förderstrecke. Mit einer Sensorik werden Auswirkungen der Lastabhängigkeit der Drehzahl der Antriebsmotoren erfasst und der Einfluss der Last auf die Fördergeschwindigkeit über einen geschlossenen Regelkreis ausgeregelt. Dieses Dokument wurde von der Erteilungsbehörde als nächstliegender Stand der Technik angesehen.

Die US 10,889,451 B2 offenbart einen Stauförderer, welcher eine erste Zone umfasst, die einer zweiten Zone vorgeschaltet ist, und wobei die zweite Zone, einer dritten Zone vorgeschaltet ist. Ein zweites Steuermodul, das der zweiten Zone zugeordnet ist, empfängt ein drittes Rückmeldesignal, das anzeigt, dass ein dritter Sensor blockiert ist, von einem dritten Steuermodul, das der dritten Zone zugeordnet ist. Das zweite Steuermodul versetzt eine zweite, der zweiten Zone zugeordnete Antriebsbaugruppe in einen ausgekuppelten Zustand und empfängt ein erstes Signal von einem ersten, der ersten Zone zugeordneten Steuermodul. Das erste Signal zeigt an, dass entweder ein erster Artikel mit einer unregelmäßigen Begrenzung oder ein zweiter Artikel mit einer regelmäßigen Begrenzung aus der ersten Zone austritt. Das zweite Steuermodul steuert die zweite Antriebsbaugruppe und eine zweite Bremsbaugruppe auf der Grundlage der Anzeige durch das erste Signal.

Die DE 10 2004 038 135 B4 offenbart ein zonengesteuertes Fördersystem. Hierbei startet eine Zonensteuerung den Betrieb einer Antriebsrolle in einer bestimmten Zone mit einer ersten Geschwindigkeit, während die Förderung eines Artikels von dieser bestimmten Zone in eine stromabwärts gelegene Zone verboten ist, wenn der Artikel in einer direkt stromaufwärts von der bestimmten Zone gelegenen Zone erfasst wird, um die von der stromaufwärtigen Seite her herangeförderten Artikel aufzunehmen. Nach der Ankunft des Artikels an einer vorgegebenen Position in der bestimmten Zone betätigt die Zonensteuerung die Antriebsrolle mit der zweiten Fördergeschwindigkeit. Wenn ein Artikel durch den Sensor in der bestimmten Zone erfasst wird, hält die Zonensteuerung den Betrieb der Antriebsrolle an.

Die US 2015/0151921 A1 offenbart Ein Fördersystem mit mehreren aufeinanderfolgende Module,. Jedes Modul umfasst eine Steuervorrichtung, die mit mindestens einer Zone verbunden ist und diese steuert. Jede Steuervorrichtung enthält eine Kommunikationsvorrichtung zur Kommunikation mit den Steuervorrichtungen in den benachbarten Modulen. Die Steuervorrichtungen führen einen Mechanismus zur Weitergabe und Anreicherung von quantitativen Segmentinformationen von den beiden Endzonen des Fördersegments aus, wodurch für jede Zone Information bereitgestellt werden.

Die US 6,471,039 B1 offenbart ein Fördersystem mit mehreren in Serie angeordneten Förderabschnitten, bei dem die Geschwindigkeit und optional auch die Beschleunigung der einzelnen Abschnitte dynamisch an den Fördervorgang angepasst wird. Jeder Förderabschnitt weist eine eigene Steuerungseinheit auf, die mit den Steuerungen der unmittelbar benachbarten Abschnitte kommuniziert.

Die US 7,756,603 B1 offenbart ein modulares, verteiltes Zonensteuersystem für Förderanlagen. Jede Förderzone umfasst eine eigene Steuerlogik, an der ein Sensor und ein Aktuator angeschlossen sind. Die Zonenmodule sind über eine mehradrige Leitung oder drahtlos miteinander verbunden und tauschen Zustandsdaten aus, um Transport- und Akkumulationsfunktionen koordiniert durchzuführen.

Der Erfindung liegt die Aufgabe zugrunde, eine Fördervorrichtung bereitzustellen, welche einen effizienteren Durchsatz an Fördergütern durch eine solche Förderstrecke erzielt.

Diese Aufgabe wird erfindungsgemäß gelöst durch eine Fördervorrichtung sowie ein Verfahren nach den unabhängigen Ansprüchen.

Die Fördervorrichtung umfasst:
- eine erste Förderzone, die einen ersten Teilabschnitt der Förderstrecke darstellt, und die einen ersten Förderantrieb zum Erzeugen einer Antriebs- oder Bremskraft auf ein in der ersten Förderzone befindliches Fördergut aufweist, eine erste Steuerungseinheit, die mit dem ersten Förderantrieb signaltechnisch verbunden ist und ausgebildet ist, um den ersten Förderantrieb mit ersten Förderparametern, ausgewählt aus: erster Fördergeschwindigkeit, erster Förderbeschleunigung oder -verzögerung erster Förderdauer anzusteuern, eine zweite Förderzone, die innerhalb der Förderstrecke stromabwärts von der ersten Förderzone angeordnet ist und einen zweiten Teilabschnitt der Förderstrecke darstellt, und die einen zweiten Förderantrieb zum Erzeugen einer Antriebs- oder Bremskraft auf ein in der zweiten Förderzone befindliches Fördergut aufweist, eine zweite Steuerungseinheit, die mit dem zweiten Förderantrieb signaltechnisch verbunden ist und ausgebildet ist, um den zweiten Förderantrieb mit zweiten Förderparametern, ausgewählt aus: zweiter Fördergeschwindigkeit, zweiter Förderbeschleunigung oder -verzögerung zweiter Förderdauer anzusteuern, eine Signalübermittlungsstrecke zwischen der ersten und der zweiten Steuerungseinheit, dadurch gekennzeichnet, dass die erste Steuerungseinheit dazu ausgebildet ist, um ein während der Förderung eines Förderguts durch die erste Förderzone erfasstes Fördersignal aus der ersten Förderzone zu empfangen, das Fördersignal zu verarbeiten und daraus einen das Förderverhalten dieses Förderguts in der ersten Förderzone beschreibenden ersten Fördergutparameter zu ermitteln und diesen ersten Fördergutparameter über die Signalübermittlungsstrecke an die zweite Steuerungseinheit zu übermitteln, und die zweite Steuerungseinheit dazu ausgebildet ist, um über die Signalübermittlungsstrecke den ersten Fördergutparameter von der ersten Steuerungseinheit zu empfangen und um zumindest einen der zweiten Förderparameter in Abhängigkeit dieses ersten Fördergutparameters einzustellen und das Fördergut mit diesem zweiten Förderparameter in der zweiten Förderzone zu fördern. Erfindungsgemäß umfasst die Fördervorrichtung zumindest zwei Förderzonen und regelmäßig werden erfindungsgemäße Fördervorrichtungen eine Vielzahl von Förderzonen umfassen, die hintereinander in einer Förderstrecke angeordnet sind. Jede Förderzone weist einen Förderantrieb auf, der durch eine Steuerungseinheit angesteuert werden kann. Die Steuerungseinheit kann dabei mehrere Förderantriebe von entsprechend mehreren Förderzonen individuell ansteuern, beispielsweise zwei oder vier Förderantriebe. Es kann aber auch jeweils eine Steuerungseinheit für einen einzelnen Förderantrieb einer Förderzone vorgesehen sein.

Die Steuerungseinheiten sind untereinander zur Signalübermittlung miteinander verbunden. Dabei kann jeweils eine Steuerungseinheit mit der stromaufwärts und stromabwärts angeordneten Steuerungseinheit der entsprechend stromaufwärts und stromabwärts gelegenen Förderzone signaltechnisch verbunden sein, es können aber auch alle Steuerungseinheiten miteinander verbunden sein, beispielsweise kann die signaltechnische Verbindung der Steuerungseinheiten durch eine busgesteuerte Signalübermittlung bewirkt werden. Sofern eine einzelne Mehrfach-Steuerungseinheit mehrere Förderantriebe individuell ansteuert, ist zu verstehen, dass innerhalb dieser Mehrfach-Steuerungseinheit entsprechend einzelne Steuerungseinheiten physikalisch oder virtuell ausgebildet sind, die ebenfalls untereinander zur Signalübertragung verbunden sind, sodass die in die Mehrfach-Steuerungseinheit integrierten Steuerungseinheiten jedes Förderantriebs zum Datenaustausch untereinander befähigt sind.

Erfindungsgemäß steuert eine Steuerungseinheit einen Förderantrieb an, um dessen Antriebsverhalten zu steuern. Dieses Antriebsverhalten des Förderantriebs kann die Geschwindigkeit, die Beschleunigung oder Verzögerung des Förderantriebs, die Antriebsenergie oder dergleichen umfassen. Die Steuerungseinheit kann auch Signale aus dem Förderantrieb empfangen, um beispielsweise in einer Regelung eine bestimmte Drehzahl einzustellen oder eine bestimmte Veränderungsrate der Drehzahl (Beschleunigung) einzustellen oder um unter wechselnden Lasten an dem Förderantrieb durch ein Fördergut eine konstante Fördergeschwindigkeit einzuregeln. Grundsätzlich kann die Steuerungseinheit den Förderantrieb also steuern oder in einem solchen geschlossenen Regelkreis regeln.

Erfindungsgemäß ist vorgesehen, dass die Steuerungseinheit aus der Förderzone ein Fördersignal empfängt. Dieses Fördersignal kann beispielsweise vom Förderantrieb an die Steuerungseinheit übermittelt werden und dann beispielsweise eine Drehzahl, eine Drehzahlveränderung, eine Unstetigkeit in einer Beschleunigung oder Abbremsung, einen Motorstrom, einen Motorstromverlauf oder eine Unstetigkeit in einem Motorstromverlauf darstellen. Das Fördersignal kann auch direkt aus Signalen oder Daten, die in der Steuerungseinheit vorliegen, stammen, sodass eine tatsächliche physikalische Übermittlung vom Förderantrieb an die Steuerungseinheit nicht erfolgt, sondern das Fördersignal in der Steuerungseinheit selbst während des Fördervorgangs des Förderguts entsteht und in diesem Sinne übermittelt wird. Das Fördersignal kann auch von einem Sensor aus der Förderzone stammen, der an die Steuerungseinheit signaltechnisch angeschlossen ist und dann beispielsweise den Beginn oder das Ende eines Förderguts signalisieren. Das Fördersignal kann auch ein aus einem solchen Sensorsignal und einem Signal des Förderantriebs zusammengesetztes Fördersignal sein, das also beispielsweise eine aus der Drehzahl des Förderantriebs abgeleitete Geschwindigkeit des Förderantriebs und eine aus den Signalen des Sensors abgeleitete Geschwindigkeit des Förderguts beinhaltet oder eine Differenz dieser beiden Geschwindigkeiten beinhaltet.

Aus dem Fördersignal wird in der Steuerungseinheit ein Fördergutparameter gebildet. Dieser Fördergutparameter ist ein dem jeweiligen Fördergut in der Förderzone zugeordneter Parameter, der also ein Verhalten oder eine Eigenschaft des Förderguts bei der Förderung in der jeweiligen Förderzone beschreibt. Dieser Fördergutparameter kann beispielsweise eine aus der Antriebskraft und Beschleunigung des Förderguts abgeleitete Masse des Förderguts sein. Der Fördergutparameter kann auch andere, nur auf das Fördergut allein bezogene Eigenschaften beschreiben, beispielsweise die Länge des Förderguts in Förderrichtung oder die Gewichtsverteilung des Förderguts über die Länge des Förderguts.

Diese Fördergutparameter können aus den Fördersignalen bestimmt werden, insbesondere aus Fördersignalen, die vom Förderantrieb und/oder vom Sensor in der Förderzone an die Steuerungseinheit übermittelt werden. Der Fördergutparameter kann im einfachsten Falle das Fördersignal selbst sein oder umfassen, beispielsweise wenn eine maximale Stromstärke des Förderantriebs bereits eine als Fördergutparameter geeignete Aussage über ein Förderverhalten ergibt. Der Fördergutparameter kann darüber hinaus auch Eigenschaften des jeweiligen Förderguts in der Förderzone beschreiben, beispielsweise einen Reibkoeffizienten oder Haftungskoeffizienten des Förderguts auf dem Förderantrieb, der aufgrund eines Geschwindigkeitsunterschieds zwischen dem Fördergut und dem Förderantrieb, einer Beschleunigung, einer Kraft oder einer ermittelten Masse des Förderguts berechnet werden kann. Der Fördergutparameter beschreibt somit ein Förderverhalten des Förderguts in der jeweiligen Förderzone oder eine für dieses Förderverhalten relevante Eigenschaft des Förderguts, die in der ersten Förderzone festgestellt wurde.

Dieser Fördergutparameter wird an eine Steuerungseinheit einer zweiten, stromabwärts liegenden Förderzone übermittelt. Diese Übermittlung kann, wenn zwei oder mehr Förderantriebe durch eine einzige Steuerungseinheit individuell gesteuert werden, innerhalb der Steuerungseinheit selbst erfolgen oder kann innerhalb einer zentralen Steuerungseinheit, die eine Vielzahl oder sämtliche Förderzonen einer Fördervorrichtung steuert, innerhalb dieser zentralen Steuerung erfolgen oder kann zwischen zwei dezentralen, entlang der Förderstrecke beabstandet montierten Steuerungseinheiten über eine entsprechende Signalverbindung erfolgen. Die Steuerungseinheit der stromabwärts liegenden Förderzone erhält hierdurch eine konkrete Information über das Fördergut.

Die zweite Steuerungseinheit kann anhand dieses empfangenen Fördergutparameters Förderparameter für den zweiten Förderantrieb bestimmen oder verändern. Dies bedeutet, dass die zweite Steuerungseinheit einen in einer vorherigen Programmierung festgelegten Förderparameter, beispielsweise eine Geschwindigkeit oder Beschleunigung des Förderantriebs, verändert, um diesen Förderparameter besser an das Fördergut anzupassen. So kann sie beispielsweise dann, wenn der Fördergutparameter beschreibt, dass bei der Beschleunigung des Förderguts in der ersten Förderzone ein unerwünschter Schlupf aufgetreten ist, die Beschleunigung in der zweiten Förderzone reduzieren, um eine verschleißarme und effiziente Förderung des Förderguts ohne Schlupf in der zweiten Förderzone zu erreichen. Eine solche Anweisung zur Schlupfreduktion kann auch als Fördergutparameter bereits von der ersten an die zweite Steuerungseinheit übermittelt werden.

Die zweite Steuerungseinheit kann auch, wenn zuvor kein Förderparameter zur Förderung des Förderguts festgelegt wurde, anhand des Fördergutparameters die Förderparameter für das Fördergut initial bestimmen. Dabei kann die zweite Steuerungseinheit einerseits den Fördergutparameter berücksichtigen, andererseits andere Vorgaben, die beispielsweise signalisieren, ob die nachfolgende, stromabwärts der zweiten Förderzone liegende Förderzone besetzt oder frei ist, ob der Abstand zu einem vorauslaufenden Fördergutverkürzt oder verlängert werden soll und dementsprechend die Förderparameter für den zweiten Förderantrieb definieren.

Erfindungsgemäß wird es daher ermöglicht, dass in direkter Reaktion auf ein Verhalten oder Eigenschaften des Förderguts die Förderparameter der stromabwärts gelegenen Förderzone angepasst werden, indem eine solche Eigenschaft in der ersten Förderzone bestimmt wird, an die zweite, nachfolgende Förderzone übermittelt wird und die zweite Förderzone dann anhand dieser Eigenschaft ihre Förderparameter entsprechend anpasst.

Erfindungsgemäß ist die zweite Steuerungseinheit ausgebildet, um den zweiten Förderparameter so einzustellen, dass ein Schlupf zwischen dem zweiten Förderantrieb und dem Fördergut in der zweiten Förderzone geringer ist als ein Schlupf zwischen dem ersten Förderantrieb und dem Fördergut in der ersten Förderzone.

Durch die erfindungsgemäße Fördervorrichtung ist es einerseits möglich, dass entlang einer Förderstrecke individuell sehr verschiedene Fördergüter gefördert werden und hierbei jede Förderzone die individuellen Eigenschaften eines einzelnen Förderguts bei den Förderparametern berücksichtigt. So können beispielsweise sehr leichte und sehr schwere Fördergüter gefördert werden und die Masse der Fördergüter wird hierbei bei den Förderparametern so berücksichtigt, dass in beiden Fällen für beide Fördergüter eine schlupffreie Beschleunigung oder Abbremsung erreicht wird und hierdurch der Abstand zwischen den beiden Fördergütern konstant gehalten wird. Des Weiteren ermöglicht die Erfindung, dass die Förderzonen entlang einer Förderstrecke auch auf sich entlang der Förderstrecke verändernde Eigenschaften eines Förderguts reagieren können und ihre Förderparameter entsprechend anpassen können. So kann beispielsweise dann, wenn aufgrund von einem Poliereffekt an der Unterseite eines Förderguts oder eines Aufraueffekts an der Unterseite eines Förderguts der Reibungskoeffizient zwischen dem Fördergut und den jeweiligen Förderantrieben sinkt oder steigt, die entsprechende Förderkraft bzw. Beschleunigung auf das Fördergut entlang der Förderstrecke reduziert bzw. erhöht werden, um diesen veränderten Eigenschaften des Förderguts nachzukommen. Ein anderer Einfluss auf ein Fördergut kann beispielsweise eine veränderte Haftreibung durch Flüssigkeit sein, eine Gewichtsverlagerung innerhalb des Förderguts durch verrutschende Inhalte und dergleichen, die jeweils als Fördersignal erfasst und an Steuerungseinheiten stromabwärts liegender Förderzonen übermittelt werden können, damit diese stromabwärts liegenden Förderzonen ihre Förderparameter entsprechend anpassen können. Mit der Erfindung wird daher eine effiziente, an die individuellen Eigenschaften eines Förderguts angepasste Förderung erreicht und hierdurch eine Verdichtung der Fördergüter auf der Förderstrecke bei gleichzeitig hoher Fördergeschwindigkeit und hohen Beschleunigungen der Fördergeschwindigkeit ermöglicht, ohne dass hierbei das Risiko besteht, dass keine staudrucklose Förderung stattfindet.

Ein erstes Beispiel einer erfindungsgemäßen Fördervorrichtung kann darin bestehen, dass ein Fördergut in eine erste Förderzone hineingefördert wird, der Förderantrieb in dieser ersten Förderzone das Fördergut mit einer ersten Beschleunigung beschleunigt und hierbei als Fördersignal an die erste Steuerungseinheit die hierfür benötigte Förderenergie als Stromstärke übermittelt. Die erste Steuerungsvorrichtung übermittelt diese Stromstärke als Fördergutparameter an die zweite Steuerungseinheit. Die Stromstärke signalisiert in diesem Fall eine Masse des Förderguts als Fördergutparameter. Die zweite Steuerungsvorrichtung steuert den zweiten Förderantrieb in der zweiten Förderzone daraufhin mit Förderparametern an, die anhand dieses Fördergutparameters optimiert sind.

Diese Ansteuerung erfolgt dann, wenn das Fördergut aus der ersten Förderzone in die zweite Förderzone gelangt und dort gefördert wird. Die zweite Förderzone kann hierbei direkt benachbart zur ersten Förderzone oder weiter stromabwärts von der ersten Förderzone liegen. Die Optimierung kann beispielsweise darin bestehen, dass der zweite Förderantrieb das Fördergut mit einer längeren Förderdauer bei einem geringeren Strom und einer geringeren, aber längeren Beschleunigung beschleunigt, um eine energiesparende Beschleunigung zu erreichen.

Ein zweites Beispiel kann darin bestehen, dass aus der ersten Förderzone ein Sensor den Beginn und das Ende des Förderguts erfasst und als Fördersignal an die erste Steuerungsvorrichtung sendet. Die erste Steuerungsvorrichtung übermittelt diese Daten, welche als Fördergutparameter die Länge des Förderguts charakterisieren, an die zweite Steuerungsvorrichtung, die daraufhin einen Abstand zwischen diesem ersten Fördergut und einem vorhergehenden oder darauffolgenden Fördergut genau anhand der Länge des Förderguts auf einen Minimalabstand einstellt, indem das Fördergut entsprechend verzögert oder beschleunigt wird.

Ein drittes Beispiel kann so ausgeführt sein, dass anhand der mit einem Sensor erfassten Geschwindigkeit des Förderguts und anhand der Geschwindigkeit des Förderantriebs ermittelt wird, dass ein Schlupf zwischen dem Förderantrieb und dem Fördergut in der ersten Förderzone aufgetreten ist. Das Fördersignal umfasst dann diese Sensorsignale und das Förderantriebssignal und wird an die erste Steuerungseinheit übermittelt. Diese übermittelt als Fördergutparameter ein Signal, das diesen Schlupf charakterisiert, an die zweite Steuerungseinheit. Die zweite Steuerungseinheit kann daraufhin die Beschleunigung des Förderguts oder die Verzögerung des Förderguts reduzieren, um eine schlupffreie Beschleunigung bzw. Verzögerung des Förderguts in der zweiten Förderzone zu erreichen.

Gemäß einer ersten bevorzugten Ausführungsform ist vorgesehen, dass das Fördersignal ein Antriebssignal von dem ersten Förderantrieb umfasst, insbesondere ausgewählt aus einer maximalen Drehzahl des Förderantriebs, einer durchschnittlichen Drehzahl des Förderantriebs, einer Drehzahländerungsrate über die Zeit, einer Drehzahländerungsratengeschwindigkeit über die Zeit, einer maximalen Antriebsenergie des Förderantriebs, einer durchschnittlichen Antriebsenergie des Förderantriebs, einer Änderungsrate der Antriebsenergie des Förderantriebs über die Zeit, einer Änderungsratengeschwindigkeit der Antriebsenergie des Förderantriebs über die Zeit. Gemäß dieser Fortbildung sendet der Förderantrieb ein Fördersignal, welches eine Fördereigenschaft des Förderguts in der ersten Förderzone charakterisiert, an die erste Steuerungseinheit. Dieses Antriebssignal kann beispielsweise in der maximalen oder durchschnittlichen Drehzahl des Förderantriebs während der Förderung des Förderguts bestehen. Das Antriebssignal kann auch eine Drehzahländerungsrate, also eine Beschleunigung des Förderantriebs sein. Weiterhin kann auch eine Drehzahländerungsratengeschwindigkeit als Antriebssignal übermittelt werden. Hierunter ist die Änderung der Beschleunigung des Förderantriebs über die Zeit zu verstehen, woraus beispielsweise eine Unstetigkeit in der Beschleunigung erkennbar wäre, die auf ein Abreißen der Haftreibung zwischen Förderantrieb und Fördergut schließen lässt und folglich einen unerwünschten Schlupf signalisiert.

Das Antriebssignal kann auch eine Charakterisierung der Antriebsenergie, ebenso als maximale oder durchschnittliche Antriebsenergie, als Änderungsrate der Antriebsenergie oder als Änderungsratengeschwindigkeit der Antriebsenergie beinhalten. Als Antriebsenergie kann beispielsweise die Stromstärke des Förderantriebs dienen, welche bei insoweit konstanter Spannung die Antriebsenergie bereits allein charakterisiert, gegebenenfalls aber auch bei sich ändernder Spannung die Antriebsenergie in Verbindung mit der Spannung charakterisiert. Da häufig die Versorgung mit Antriebsenergie auch über die erste Steuerungseinheit erfolgt, kann die Antriebsenergie direkt als Antriebssignal aus der Verbindungsleitung zwischen der Steuerungseinheit und dem Förderantrieb von der Steuerungseinheit empfangen bzw. detektiert werden.

Gemäß einer weiteren bevorzugten Ausführungsform ist vorgesehen, dass die erste Förderzone einen Fördersensor umfasst, der ausgebildet ist zur Erfassung einer Position, Geschwindigkeit und/oder Beschleunigung des Förderguts in der ersten Förderzone, und der Förderparameter als ein die Position, die Geschwindigkeit und/oder die Beschleunigung des Förderguts in der ersten Förderzone beschreibendes Sensorsignal umfasst. Gemäß dieser Ausführungsform umfasst die Förderzone einen Fördersensor, dessen Signale im Fördersignal umfasst sind. Ein solcher Fördersensor kann beispielsweise eine einfache Lichtschranke oder eine doppelte Lichtschranke sein, welche neben einer Positionserfassung auch eine Geschwindigkeitserfassung ermöglicht. Der Sensor kann auch als Kraftsensor zur Erfassung eines Gewichts des Förderguts ausgebildet sein. Der Fördersensor kann ebenso als weitergehende Bilderfassungseinrichtung ausgeführt sein, beispielsweise als digitale Kameraeinheit, und aus den erfassten Bilddaten mittels einer Bildauswertung Informationen über das Fördergut und dessen Förderverhalten (Geschwindigkeit, Beschleunigung, Kippneigung) in der Förderzone erfassen.

Die vom Fördersensor erfassten Förderparameter ermöglichen, wie zuvor erläutert, in Alleinstellung ein Fördersignal zu erzeugen oder können in Kombination mit anderen Daten, beispielsweise aus dem Förderantrieb, wie zuvor erläutert, ein solches Fördersignal bilden und hierdurch eine Fördercharakteristik des Förderguts in der Förderzone ergeben.

Noch weiter ist es bevorzugt, wenn die erste Steuerungseinheit ausgebildet ist, um den ersten Fördergutparameter an die zweite Steuerungseinheit zu übermitteln, bevor das Fördergut die erste Förderzone vollständig verlassen hat. Gemäß dieser Ausführungsform wird der erste Fördergutparameter an die zweite Steuerungseinheit übermittelt, solange sich noch ein zumindest kleiner Abschnitt des Förderguts in der ersten Förderzone befindet. Das Fördergut kann zu diesem Zeitpunkt bereits teilweise die zweite Förderzone erreicht haben. Gleichwohl ermöglicht diese Übermittlung zu diesem Zeitpunkt es der Steuerungseinheit der zweiten Förderzone, den oder die Förderparameter so anzupassen, dass eine anhand des von der ersten Steuerungseinheit empfangenen Fördergutparameters optimierte Förderung des Förderguts in der zweiten Förderzone erfolgt.

Alternativ zu dieser Ausführungsform kann der erste Fördergutparameter an die zweite Steuerungseinheit übermittelt werden, bevor das Fördergut die zweite Förderzone erreicht hat oder bevor das Fördergut durch einen Förderantrieb der zweiten Förderzone gefördert wird. Durch diesen gegebenenfalls früheren Zeitpunkt der Übermittlung des Fördergutparameters wird erreicht, dass die Förderung des Förderguts in der zweiten Förderzone vollständig unter Berücksichtigung des ersten Fördergutparameters erfolgen kann.

Die Fördervorrichtung kann weiter fortgebildet werden durch eine stromabwärts der zweiten Förderzone angeordnete dritte Förderzone mit einem dritten Förderantrieb und einer dritten Steuerungseinheit, die mit der ersten und/oder der zweiten Steuerungseinheit über eine zweite Signalübermittlungsstrecke verbunden ist und ausgebildet ist, um den dritten Förderantrieb mit dritten Förderparametern, ausgewählt aus: dritter Fördergeschwindigkeit, dritter Förderbeschleunigung oder -verzögerung dritter Förderdauer anzusteuern, wobei die erste Steuerungseinheit ausgebildet ist, um den ersten Fördergutparameter über die zweite Signalübermittlungsstrecke an die dritte Steuerungseinheit zu übermitteln und/oder die zweite Steuerungseinheit ausgebildet ist, um ein während der Förderung eines Förderguts durch die zweite Förderzone erfasstes Fördersignal aus der zweiten Förderzone zu empfangen, und daraus einen das Förderverhalten dieses Förderguts in der zweiten Förderzone beschreibenden zweiten Fördergutparameter zu ermitteln und diesen zweiten Fördergutparameter über die Signalübermittlungsstrecke an die dritte Steuerungseinheit zu übermitteln, die zweite Steuerungseinheit dazu ausgebildet ist, um über die Signalübermittlungsstrecke den Fördergutparameter von der ersten Steuerungseinheit zu empfangen und/oder den zweiten Fördergutparameter von der zweiten Steuerungseinheit zu empfangen und um zumindest einen der dritten Förderparameter in Abhängigkeit vom Fördergutparameter und/oder vom zweiten Fördergutparameter einzustellen und das Fördergut mit diesem dritten Förderparameter in der dritten Förderzone zu fördern.

Gemäß dieser Fortbildung wird auch in der zweiten Förderzone ein Fördersignal erfasst und als Fördergutparameter an eine dritte Steuerungseinheit für eine dritte Förderzone übermittelt. Prinzipiell wird hiermit die steuerungstechnische Architektur definiert, dass zunächst die zweite Steuerungseinheit sowohl einen Fördergutparameter empfängt und anhand dieses Fördergutparameters auch einen Förderparameter zur Förderung des Förderguts in der zweiten Steuerzone anpasst bzw. bestimmt. Die zweite Steuerungseinheit erfasst darüber hinaus aber auch ein Fördersignal, das aus der zweiten Förderzone stammt und folglich bei der Förderung des Förderguts mit diesen angepassten oder eingestellten Förderparametern in der zweiten Förderzone erfasst wurde. Aus diesem Fördersignal aus der zweiten Förderzone wird dann ein zweiter Fördergutparameter ermittelt, der an eine Steuerungseinheit einer dritten Förderzone übermittelt wird. Diese Steuerungsarchitektur ermöglicht einerseits ein fortwährendes Anpassen der Förderparameter an das Fördergut.

So kann beispielsweise anhand des zweiten Fördergutparameters eine weitere Optimierung der Förderparameter erfolgen, beispielsweise dann, wenn die Anpassung der Förderparameter anhand des (ersten) Fördergutparameters noch nicht zu einer optimalen Förderung des Förderguts geführt hat. Es ist weiterhin auch möglich, dass die dritte Steuerungseinheit ausgebildet ist, um sowohl den (ersten) Fördergutparameter als auch den zweiten Fördergutparameter zu empfangen und anhand eines Vergleichs, beispielsweise einer Differenz dieser beiden Fördergutparameter einen Förderparameter für die Förderung des Förderguts in der dritten Förderzone zu bestimmen. Hierdurch kann eine Veränderung des Fördergutparameters berücksichtigt werden und eine genauere Anpassung der Förderparameter erfolgen.

Es ist zu verstehen, dass die erfindungsgemäße Fördervorrichtung insbesondere in mehr als zwei Förderzonen, insbesondere in beispielsweise jeder Förderzone oder jeder zweiten oder jeder dritten oder jeder n-ten Förderzone ein Fördersignal erfasst und jeweils einen Fördergutparameter hieraus bildet und übermittelt. So kann entlang der gesamten Förderstrecke in der Fördervorrichtung eine Optimierung der Förderparameter erfolgen und etwaige Veränderungen des Förderguts oder seiner Fördercharakteristik entlang der gesamten Förderstrecke berücksichtigt werden.

Dabei ist es weiter besonders bevorzugt, wenn die zweite Steuerungseinheit ausgebildet ist, um die Differenz zwischen dem ersten und dem zweiten Fördergutparameter zu ermitteln, anhand der Differenz einen Änderungsfördergutparameter zu ermitteln und den Änderungsfördergutparameter an die dritte Steuerungseinheit zu übermitteln, oder die dritte Steuerungseinheit ausgebildet ist, um die Differenz zwischen dem ersten und dem zweiten Fördergutparameter zu ermitteln, anhand der Differenz einen Änderungsfördergutparameter zu ermitteln, wobei die dritte Steuerungseinheit ausgebildet ist, um zumindest einen der dritten Förderparameter in Abhängigkeit von dem Änderungsfördergutparameter einzustellen und das Fördergut mit diesem dritten Förderparameter in der dritten Förderzone zu fördern.

Gemäß dieser Fortbildungsform ist die dritte Steuerungseinheit ausgebildet, um einen oder mehrere der dritten Förderparameter in Abhängigkeit von einem Änderungsfördergutparameter einzustellen. Dieser Änderungsfördergutparameter wird durch Vergleich des ersten und des zweiten Fördergutparameters ermittelt, wobei dieser Vergleich in der zweiten Steuerungseinheit oder in der dritten Steuerungseinheit ausgeführt werden kann und dementsprechend entweder von der zweiten Steuerungseinheit der Änderungsfördergutparameter an die dritte Steuerungseinheit übermittelt wird oder der Änderungsfördergutparameter direkt in der dritten Steuerungseinheit übermittelt wird.

Es ist weiter bevorzugt, wenn der erste oder der zweite Fördergutparameter eine Länge des Förderguts in einer sich entlang der Förderstrecke erstreckenden Richtung, eine Masse oder Gewichtskraft des Förderguts, und/oder einen Reibungskoeffizienten zwischen einer Auflagefläche des Förderguts auf dem ersten oder zweiten Förderantrieb und dem ersten oder zweiten Förderantrieb beschreibt. Gemäß dieser Fortbildungsform werden durch den Fördergutparameter ein oder mehrere für die Förderung besonders relevante Eigenschaften des Förderguts bzw. Charakteristika des Förderverhaltens des Förderguts beschrieben. So ist die Länge des Förderguts in Förderrichtung insbesondere für die Bestimmung der Förderdauer, also der Zeitdauer, über die ein Förderantrieb auf das Fördergut eine Kraft übertragen kann, von Bedeutung. Die Masse des Förderguts, die sich auch in einer Gewichtskraft des Förderguts auswirkt, ist einerseits für die übertragbare Reibkraft vom Förderantrieb auf das Fördergut von Bedeutung, andererseits für die notwendige Kraft, mit der das Fördergut für eine bestimmte Beschleunigung durch den Förderantrieb angetrieben werden muss. Der Reibungskoeffizient beschreibt das Verhältnis zwischen einer Antriebskraft in Förderrichtung und einer Auflagekraft des Förderguts senkrecht hierzu. Der Reibungskoeffizient kann sich insbesondere durch Veränderungen an der Oberfläche des Förderguts oder der Auflagefläche der Fördervorrichtung für das Fördergut verändern, kann aber auch durch Verschmutzung oder durch Flüssigkeitseinwirkung verändert werden.

Gemäß einer weiteren bevorzugten Ausführungsform ist vorgesehen, dass die zweite Steuerungseinheit ausgebildet ist, um den zweiten Förderparameter so einzustellen, dass ein Schlupf zwischen dem zweiten Förderantrieb und dem Fördergut in der zweiten Förderzone geringer ist als ein Schlupf zwischen dem ersten Förderantrieb und dem Fördergut in der ersten Förderzone, und/oder die dritte Steuerungseinheit ausgebildet ist, um den dritten Förderparameter so einzustellen, dass ein Schlupf zwischen dem dritten Förderantrieb und dem Fördergut in der dritten Förderzone geringer ist als ein Schlupf zwischen dem zweiten Förderantrieb und dem Fördergut in der zweiten Förderzone.

Gemäß dieser Fortbildungsform wird der Förderparameter in der zweiten bzw. dritten Förderzone durch die zweite bzw. dritte Steuerungseinheit so optimiert, dass ein Schlupf, der zuvor in der ersten bzw. zweiten Förderzone zwischen Förderantrieb und Fördergut beobachtet wurde, hierdurch reduziert wird. Als Schlupf ist hierbei eine Geschwindigkeitsdifferenz zwischen dem Förderantrieb und dem Fördergut zu verstehen, der folglich eine Relativbewegung zwischen dem Förderantrieb und dem Fördergut erzeugt. Eine solche Relativbewegung kann einerseits darin bestehen, dass der Förderantrieb sich schneller bewegt als das Fördergut, also eine zu hohe Förderantriebsgeschwindigkeit oder Beschleunigung des Förderantriebs vorliegt, der das Fördergut nicht folgen kann. Umgekehrt kann auch das Fördergut sich schneller bewegen als der Förderantrieb, wenn eine Verzögerung des Förderguts, also eine Abbremsung, durch den Förderantrieb bewirkt werden soll. In diesem Fall rutscht das Fördergut über den sich langsamer bewegenden Förderantrieb und treibt letztendlich den Förderantrieb durch diese Reibkraft an. In beiden Fällen wird durch diesen Schlupf eine unerwünschte Verschleißwirkung an den Oberflächen von Fördergut und Förderantrieb erzeugt und eine ungünstige Kraftübertragung zwischen Förderantrieb und Fördergut ist die Folge. Durch eine Verminderung des Schlupfes kann dieser Nachteil verringert oder vollständig vermieden werden.

Grundsätzlich unterschieden wird hierbei zwischen Haftreibung und Gleitreibung. Bei einer Haftreibung besteht keine bzw. praktisch keine Relativbewegung zwischen dem Förderantrieb und dem Fördergut, das heißt, die Förderantriebsgeschwindigkeit ist gleich der Fördergutgeschwindigkeit. Dies drückt sich bei typischen Rollenantrieben so aus, dass die Umfangsgeschwindigkeit der motorbetriebenen Förderrolle der horizontalen Fördergeschwindigkeit des Förderguts entspricht. Bei Gleitreibung hingegen besteht eine Relativgeschwindigkeit zwischen Förderantrieb und Fördergut. Grundsätzlich ist die übertragbare Kraft bei Gleitreibung geringer als die übertragbare Kraft bei Haftreibung. Dementsprechend ist es bevorzugt, wenn der Schlupf zwischen Förderantrieb und Fördergut so weit verringert wird, dass anstelle einer zuvor festgestellten Gleitreibung zwischen Förderantrieb und Fördergut in der zweiten bzw. dritten Förderzone eine Haftreibung zwischen Förderantrieb und Fördergut eingestellt wird, also kein Unterschied zwischen der Förderantriebsgeschwindigkeit und der Fördergutgeschwindigkeit besteht.

Noch weiter ist es bevorzugt, wenn die Förderstrecke eine Vielzahl von Förderzonen mit Förderantrieben und eine Vielzahl von Steuerungseinheiten zur Ansteuerung der Förderantriebe umfasst wobei die erste Steuerungseinheit ausgebildet ist, um den ersten Fördergutparameter an alle Steuerungseinheiten zu übermitteln. Gemäß dieser Fortbildungsform wird der erste Fördergutparameter an alle in der Fördervorrichtung enthaltenen Steuerungseinheiten übermittelt, sodass diese Steuerungseinheiten insgesamt anhand dieses Fördergutparameters einen oder mehrere Förderparameter einstellen und damit optimieren können. Grundsätzlich kann hierdurch ausgehend von einer ersten Förderzone eine Optimierung der Förderung entlang der gesamten Förderstrecke bewirkt werden. Es ist zu verstehen, dass auch in nachfolgenden Förderzonen erfasste Fördersignale und daraus generierte Fördergutparameter vorzugsweise an alle, zumindest aber an alle stromabwärts liegenden Förderzonen übermittelt werden können, um eine Optimierung über die gesamte restliche Förderstrecke des Förderguts vornehmen zu können. Erfindungsgemäß sind aber auch zahlreiche Varianten hiervon denkbar, die insbesondere davon abhängen, inwieweit Fördersignale in den einzelnen Förderzonen erfasst werden. So kann beispielsweise ein Fördergutparameter nur an die zwei, drei, vier weiteren, direkt benachbarten stromabwärts liegenden Steuerungseinheiten der Förderzonen übermittelt werden, um in diesen Förderzonen eine entsprechende optimierte Einstellung von Förderparametern durchzuführen. Dies kann insbesondere kombiniert sein mit einer Erfassung eines Fördersignals in jeder zweiten, jeder dritten, jeder vierten Förderzone, sodass die Steuerung der Förderung des Förderguts durch eine regelmäßig wiederkehrende Erfassung eines Fördersignals, dessen Weiterleitung als Fördergutparameter an eine bestimmte Anzahl von Steuerungseinheiten nachfolgender Förderzonen charakterisiert ist, wobei die Anzahl der Förderzonen, die einen Fördergutparameter empfangen und hieraus einen Förderparameter optimieren, dem Intervall der Förderzonen entspricht, in dem die Fördersignale empfangen werden.

Ein weiterer Aspekt der Erfindung ist ein Verfahren zur Steuerung einer Fördervorrichtung zur Förderung von Fördergütern entlang einer Förderstrecke, mit den Schritten: Fördern des Förderguts durch eine erste Förderzone, die einen ersten Teilabschnitt der Förderstrecke darstellt, mittels eines ersten Förderantriebs, hierauf folgend Fördern des Förderguts durch eine zweite Förderzone, die einen zweiten Teilabschnitt der Förderstrecke darstellt, mittels eines zweiten Förderantriebs, Erfassen eines ersten Förderparameters in einer ersten Steuerungseinheit, welche den ersten Förderantrieb ansteuert, Ermitteln eines ersten Fördergutparameters aus dem ersten Förderparameter, Einstellen eines zweiten Förderparameters, ausgewählt aus: zweiter Fördergeschwindigkeit, zweiter Förderbeschleunigung oder -verzögerung zweiter Förderdauer in Abhängigkeit von dem ersten Fördergutparameter und Ansteuern des zweiten Förderantriebs mit dem zweiten Förderparameter.

Das Verfahren kann insbesondere mit einer Fördervorrichtung der zuvor beschriebenen Art ausgeführt werden und die zuvor erläuterten Eigenschaften, Vorteile und Verfahrensabläufe sind insbesondere auch auf das erfindungsgemäße Verfahren anzuwenden.

Das Verfahren kann fortgebildet werden durch die Schritte: Übermitteln des Fördersignals mit einem darin umfassten Antriebssignal von dem ersten Förderantrieb, das insbesondere ausgewählt ist aus: einer maximalen Drehzahl des Förderantriebs, einer durchschnittlichen Drehzahl des Förderantriebs, einer Drehzahländerungsrate über die Zeit, einer Drehzahländerungsratengeschwindigkeit über die Zeit, einer maximalen Antriebsenergie des Förderantriebs, einer durchschnittlichen Antriebsenergie des Förderantriebs, einer Änderungsrate der Antriebsenergie des Förderantriebs über die Zeit, einer Änderungsratengeschwindigkeit der Antriebsenergie des Förderantriebs über die Zeit.

Das Verfahren kann fortgebildet werden durch die Schritte: Erfassen des ersten Fördersignals durch einen Fördersensor in der ersten Förderzone, insbesondere durch Erfassen einer Position, Geschwindigkeit und/oder Beschleunigung des Förderguts in der ersten Förderzone, und Übermitteln des Förderparameters mit einem die Position, die Geschwindigkeit und/oder die Beschleunigung des Förderguts in der ersten Förderzone beschreibenden Sensorsignal.

Das Verfahren kann fortgebildet werden durch die Schritte: Übermitteln des ersten Fördergutparameters an die zweite Steuerungseinheit bevor das Fördergut die erste Förderzone vollständig verlassen hat.

Das Verfahren kann fortgebildet werden durch die Schritte: Übermitteln des ersten Fördergutparameters an eine stromabwärts der zweiten Förderzone angeordnete dritte Steuerungseinheit, und/oder Empfangen eines zweiten Fördersignals aus der zweiten Förderzone in der zweiten Steuerungseinheit, Ermitteln eines das Förderverhalten dieses Förderguts in der zweiten Förderzone beschreibenden zweiten Fördergutparameters und Übermitteln dieses zweiten Fördergutparameters an eine dritte Steuerungseinheit, wobei die dritte Steuerungseinheit einen Förderantrieb in einer dritten Förderzone mit dritten Förderparametern steuert, die ausgewählt sind aus: dritter Fördergeschwindigkeit, dritter Förderbeschleunigung oder -verzögerung, -dritter Förderdauer, Empfangen des ersten und/oder zweiten Fördergutparameters in der dritten Steuerungseinheit, Einstellen zumindest eines der dritten Förderparameter in Abhängigkeit des ersten Fördergutparameters und/oder des zweiten Fördergutparameters und Fördern des Förderguts mit diesem dritten Förderparameter in der dritten Förderzone.

Das Verfahren kann fortgebildet werden durch die Schritte: Vergleichen des ersten und des zweiten Fördergutparameters, insbesondere Bilden der Differenz zwischen dem ersten und dem zweiten Fördergutparameter, Ermitteln eines Änderungsfördergutparameters anhand des Vergleichs oder der Differenz und gegebenenfalls Übermitteln des Änderungsfördergutparameters an die dritte Steuerungseinheit, und Einstellen eines dritten Förderparameters in Abhängigkeit des Änderungsfördergutparameters und Fördern des Förderguts mit diesem dritten Förderparameter in der dritten Förderzone.

Das Verfahren kann fortgebildet werden indem im ersten oder zweiten Fördergutparameter eine Länge des Förderguts in einer sich entlang der Förderstrecke erstreckenden Richtung, eine Masse oder Gewichtskraft des Förderguts, und/oder ein Reibungskoeffizient zwischen einer Auflagefläche des Förderguts auf dem ersten oder zweiten Förderantrieb und dem ersten oder zweiten Förderantrieb beschrieben wird.

Das Verfahren ist fortgebildet durch die Schritte: Einstellen des zweiten Förderparameters so, dass ein Schlupf zwischen dem zweiten Förderantrieb und dem Fördergut in der zweiten Förderzone geringer ist als ein Schlupf zwischen dem ersten Förderantrieb und dem Fördergut in der ersten Förderzone.

Das Verfahren kann fortgebildet werden durch die Schritte: Übermitteln des ersten Fördergutparameters an eine Vielzahl von Steuerungseinheiten zur Ansteuerung von Förderanarieben einer Vielzahl von Förderzonen in der Förderstrecke, jeweils Einstellen eines Förderparameters in den Steuerungseinheiten, und jeweils Ansteuern der Förderantriebe in den Förderzonen mit dem eingestellten Förderparameter.

Bevorzugte Ausführungsformen werden anhand der beiliegenden Figuren erläutert. Es zeigen
- Fig. 1: eine schematische Ansicht einer Förderstrecke bestehend aus drei Förderzonen gemäß einer ersten bevorzugten Ausführungsform der Erfindung;
- Fig. 2: eine schematische Ansicht einer Förderstrecke bestehend aus einer Steuerungseinheit mit Anschlussbuchsen für vier Förderzonen gemäß einer zweiten bevorzugten Ausführungsform der Erfindung:
- Fig. 3: ein beispielhaftes Ablaufdiagramm der Steuerung der Fördervorrichtung.

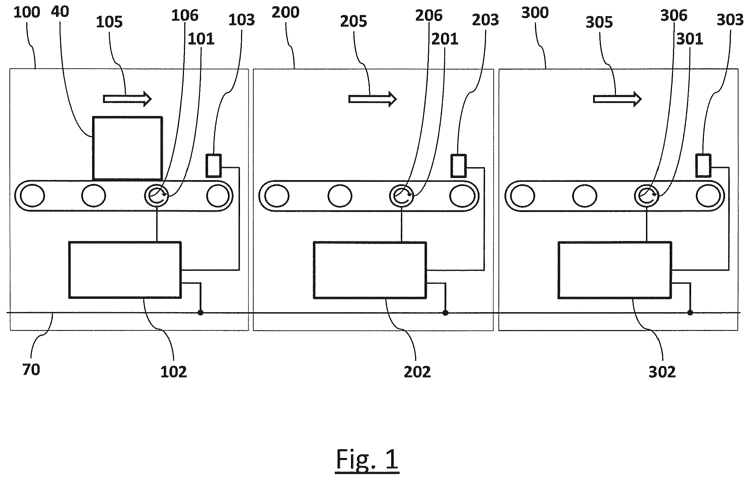

In Fig. 1 ist ein Ausschnitt aus einer Fördervorrichtung abgebildet, der aus insgesamt drei Förderzonen 100 - 300 besteht. Die Förderzonen 100 - 200 und die Förderzonen 200 - 300 sind direkt benachbart und bilden eine Förderstrecke.

Jede Förderzone 100 - 300 enthält einen Förderantrieb 101 - 301, der die Leerlaufrollen der Förderzone über Riemen mit antreibt und so das Fördergut 40 befördert. Die Förderrichtung 105 - 305 wird durch die Drehrichtung 106 - 306 der Förderantriebe 101 - 301 bestimmt. Die Drehrichtung ist so konfiguriert, dass das Fördergut stromabwärts befördert wird. Jeder Förderantrieb 101, 201, 301 ist an eine entsprechende Steuerungseinheit 102, 202, 302 signaltechnisch angeschlossen, indem eine Signal- und Spannungsversorgungsleitung mit daran angeordnetem Motoranschlussstecker in eine Motoranschlussbuchse an der entsprechenden Steuerungseinheit angeschlossen ist.

Jede Förderzone 100 - 300 weist jeweils einen stromabwärts von der Mitte der Förderzone montierten Sensor 103 - 303 auf. Diese Sensoren sind so angeordnet, dass das Vorhandensein eines Transportguts im Austrittsbereich der einzelnen Förderzonen damit erfasst werden kann. Jeder Sensor 103 - 303 ist an die entsprechende Steuerungseinheit 102 - 302 signaltechnisch angeschlossen, indem eine Signal- und Spannungsversorgungsleitung mit daran angeordnetem Sensoranschlussstecker in eine Sensoranschlussbuchse an der entsprechenden Steuerungseinheit angeschlossen ist.

Ein Datenaustausch zwischen den Steuerungseinheiten selbst kann mittels einer Buskommunikationsleitung 70 erfolgen.

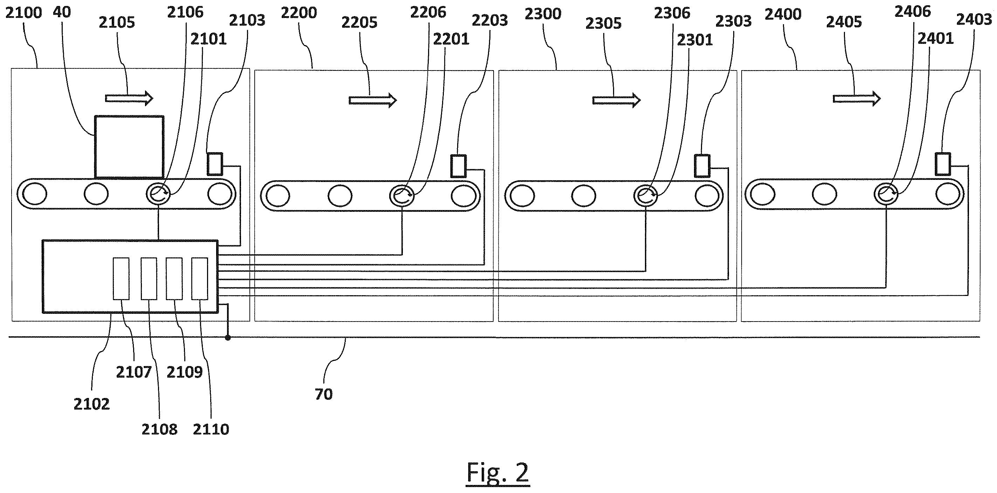

Fig. 2 stellt eine zweite Ausführungsform einer erfindungsgemäßen Fördervorrichtung dar, bei der eine Zentralsteuerungseinheit 2102 eine Mehrzahl von Förderzonen 2100, 2200, 2300, 2400 steuert, wobei die Steuerung durch vier in der Steuerungseinheit implementierte virtuelle Steuerungseinheiten 2107 - 2110 erfolgt. Die Steuerungseinheiten 2107 - 2110 werten die Signale von vier Sensoren 2103, 2203, 2303, 2403 aus. Die Steuerungseinheiten 2107 - 2110 steuern vier Förderantriebe 2101, 2201, 2301, 2401 in den einzelnen Förderzonen, indem in Abhängigkeit der Signale der Sensoren 2103, 2203, 2303, 2403 diese Förderantriebe aktiviert oder deaktiviert werden. Die Steuerungseinheiten in der Zentralsteuerungseinheit kontrollieren die Drehrichtung 2106, 2206, 2306, 2406 der Förderantriebe, um ein Transportgut 40 stromabwärts in Förderrichtung 2105 - 2405 zu befördern. Die Steuerungseinheiten 2107 - 2110 können untereinander über eine, insbesondere interne, Datenverbindung wie beispielsweise eine Platine mit Leitungsbahnen, auf der die Steuerungseinheiten platziert sind, Daten übermitteln, die an eine zentrale Buskommunikationsleitung 70 angeschlossen ist. Eine interne Datenverbindung innerhalb der Zentralsteuerungseinheit kann in diesem Ausführungsbeispiel die Signalübermittlungsstrecke zwischen den einzelnen Steuerungseinheiten darstellen. Die Signalübermittlungsstrecke kann ebenso wie die Steuerungseinheiten virtuell ausgebildet sein, so dass insbesondere eine Kommunikationsfunktion zwischen Funktionseinheiten innerhalb der Zentralsteuerungseinheit die Aufgabe einer durch Hardware gebildeten Signalübermittlungsstrecke übernimmt.

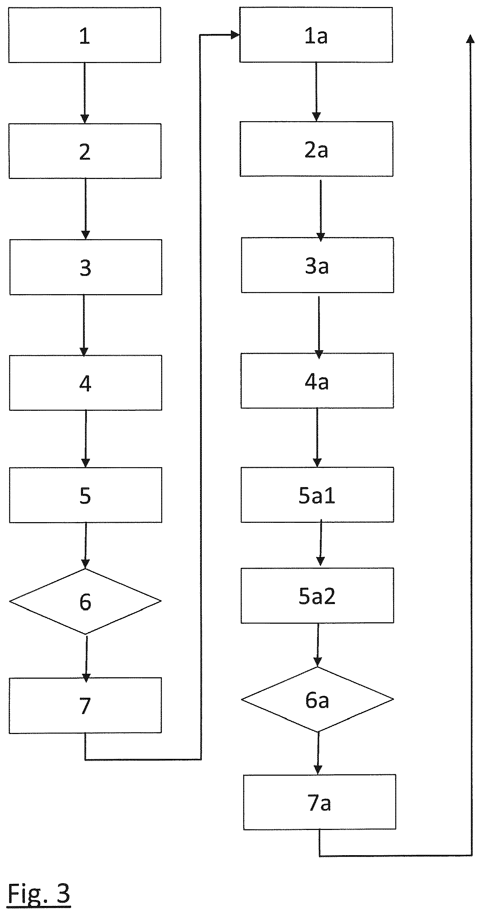

Fig. 3 zeigt einen Steuerungsablauf der Förderung eines Förderguts entlang einer Förderstrecke. Dabei ist zu verstehen, dass dieser Steuerungsablauf sowohl in der Fördervorrichtung gemäß Fig. 1 als auch in der Fördervorrichtung gemäß Fig. 2 ausgeführt werden kann. Der hierbei hinsichtlich der Datenübermittlung auftretende Unterschied ist lediglich die Übermittlung der Signale zwischen den externen Steuerungseinheiten bei der Ausführungsform gemäß Fig. 1 und die Übermittlung derselben Signale innerhalb der Zentralsteuerungseinheit zwischen den dort integrierten virtuellen Steuerungseinheiten bei der Ausführungsform gemäß Fig. 2.

Der Steuerungsablauf beginnt mit der Förderung eines Förderguts in der ersten Förderzone in Schritt 1. Dabei wird in der ersten Förderzone ein Fördersignal in Schritt 2 erfasst. Dieses Fördersignal kann aus dem Förderantrieb heraus oder aus dem Fördersensor heraus erfasst werden und charakterisiert ein Förderverhalten des Förderguts in der ersten Förderzone. Das Fördersignal wird in Schritt 3 an die erste Steuerungseinheit übermittelt und in Schritt 4 aus diesem Fördersignal ein Fördergutparameter gebildet. Dieser Fördergutparameter kann dem Fördersignal entsprechen oder kann eine signaltechnische Verarbeitung des Fördersignals sein. Insbesondere dann, wenn das Fördersignal aus einem Signalwert des Förderantriebs und einem Signalwert des Fördersensors besteht oder diese umfasst, kann eine signaltechnische Verarbeitung, um hieraus beispielsweise einen festgestellten Schlupf des Förderguts in der ersten Förderzone zu ermitteln, vorteilhaft sein.

Der erste Fördergutparameter wird darauffolgend in Schritt 5 zu der zweiten Steuerungseinheit gesendet, welche eine stromabwärts von der ersten Förderzone liegende zweite Förderzone ansteuert.

Die zweite Steuerungseinheit prüft in Schritt 6, ob der Fördergutparameter Veranlassung dazu gibt, einen der zweiten Förderparameter zu verändern. Die zweiten Förderparameter, mit denen der Förderantrieb in der zweiten Förderzone gesteuert wird, sind in der zweiten Steuerungseinheit vorab einprogrammiert worden auf einen Normalwert. Sofern der Prüfschritt 6 ergibt, dass der Fördergutparameter eine ungünstige, zu optimierende Fördersituation in der ersten Förderzone signalisiert, wird ein oder mehrere zweite Förderparameter dementsprechend durch die zweite Steuerungseinheit modifiziert. Dies kann beispielsweise eine Reduktion des Beschleunigungswertes des Förderantriebs sein, wenn in der ersten Förderzone ein Schlupf beim Beschleunigen des Förderguts festgestellt wurde. Dies kann beispielsweise auch eine Verlängerung der Förderdauer bei gleichzeitiger Verringerung der Förderkraft sein, um bei einem Fördergutparameter, der ein langes Fördergut charakterisiert, eine geringere Energiebelastungsspitze zu erzeugen und die gleiche Beschleunigung des Förderguts zu erzielen.

Die zweite Steuerungseinheit steuert dann in Schritt 7 den zweiten Förderantrieb mit diesem modifizierten Förderparameter an. In Schritt 1a wird dann wiederum dasselbe Fördergut, welches in die zweite Förderzone eingetreten ist, nun mit diesen Förderparametern in der zweiten Förderzone durch den zweiten Förderantrieb gefördert. Auch hier wird in der Förderzone in Schritt 2a ein Fördersignal erfasst, in Schritt 3a an die zweite Steuerungseinheit übermittelt, die daraus in Schritt 4a einen Fördergutparameter bildet. Dieser zweite Fördergutparameter wird in einem Schritt 5a1 an eine dritte Steuerungseinheit übermittelt. Die dritte Steuerungseinheit empfängt weiterhin in einem Schritt 5a2 den ersten Fördergutparameter und kann dann in einem Prüfschritt 6a einerseits den ersten und den zweiten Fördergutparameter miteinander vergleichen, gegebenenfalls hieraus eine Differenz bilden, um festzustellen, ob eine Veränderung der Fördergutparameter zwischen der ersten und der zweiten Förderzone stattgefunden hat. Im Prüfschritt 6a kann weiterhin der zweite Fördergutparameter und/oder der erste Fördergutparameter in absoluter Weise durch die dritte Steuerungseinheit überprüft werden, um festzustellen, ob der absolute erste oder zweite Fördergutparameter Veranlassung zur Modifikation eines dritten Förderparameters gibt, mit dem ein dritter Förderantrieb in einer dritten Förderzone durch die dritte Steuerungseinheit angesteuert wird. Im Ergebnis dieser Prüfung wird in einem Schritt 7a dann der dritte Förderantrieb mit einem gegebenenfalls modifizierten dritten Förderparameter angesteuert. Das Fördergut wird dann übereinstimmend wie zuvor, wenn die dritte Förderzone erreicht wird, durch den dritten Förderantrieb dort gefördert. Die vorstehenden Ablaufschritte wiederholen sich in Bezug auf die vierte und jede weitere folgende Förderzone.

Mit dem erfindungsgemäßen Verfahrensablauf und der erfindungsgemäßen Fördervorrichtung wird somit eine lernende Fördervorrichtung bereitgestellt, welche ausgehend von einer am Anfang der Förderstrecke liegenden ersten Förderzone Informationen über das Förderverhalten des Förderguts erfasst, an nachfolgende Förderzonen weitergibt, in denen anhand dieses erfassten Förderverhaltens die Förderung optimiert abläuft. Zugleich können entlang der Förderstrecke auftretende Veränderungen des Förderverhaltens des Förderguts auch in Echtzeit erfasst werden und die Förderung des Förderguts dementsprechend angepasst und optimiert werden.

### Bezugszeichenliste

- 100, 200, 300: Förderzone
- 101, 201, 301: Förderantrieb
- 102, 202, 302: Steuerungseinheit
- 103, 203, 303: Sensor

- 2100, 2200, 2300: Förderzone
- 2102: Zentralsteuerungseinheit
- 2101, 2201, 2301, 2401: Förderantrieb
- 2103, 2203, 2303, 2403: Sensor
- 2106, 2206, 2306, 2406: Drehrichtung
- 2105, 2205, 2305, 2405: Förderrichtung
- 2107, 2108, 2109, 2110: virtuelle Steuerungseinheit

- 40: Fördergut
- 70: Buskommunikationsleitung

## Patentansprüche

1. Fördervorrichtung zur Förderung von Fördergütern (40) entlang einer Förderstrecke, umfassend
- eine erste Förderzone (100, 2100), die einen ersten Teilabschnitt der Förderstrecke darstellt, und die einen ersten Förderantrieb (101, 2101) zum Erzeugen einer Antriebs- oder Bremskraft auf ein in der ersten Förderzone befindliches Fördergut (40) aufweist,
- eine erste Steuerungseinheit (102, 2107), die mit dem ersten Förderantrieb (101, 2101) signaltechnisch verbunden ist und ausgebildet ist, um den ersten Förderantrieb (101, 2101) mit ersten Förderparametern, ausgewählt aus:
- erster Fördergeschwindigkeit,
- erster Förderbeschleunigung oder -verzögerung
- erster Förderdauer
anzusteuern,
- eine zweite Förderzone (200, 2200), die innerhalb der Förderstrecke stromabwärts von der ersten Förderzone (100, 2100) angeordnet ist und einen zweiten Teilabschnitt der Förderstrecke darstellt, und die einen zweiten Förderantrieb (201, 2201) zum Erzeugen einer Antriebs- oder Bremskraft auf ein in der zweiten Förderzone (200, 2200) befindliches Fördergut (40) aufweist,
- eine zweite Steuerungseinheit (202, 2108), die mit dem zweiten Förderantrieb (201, 2201) signaltechnisch verbunden ist und ausgebildet ist, um den zweiten Förderantrieb (201, 2201) mit zweiten Förderparametern, ausgewählt aus:
- zweiter Fördergeschwindigkeit,
- zweiter Förderbeschleunigung oder -verzögerung
- zweiter Förderdauer anzusteuern,
- eine Signalübermittlungsstrecke (70) zwischen der ersten und der zweiten Steuerungseinheit (102, 2107; 202, 2108),
wobei
- die erste Steuerungseinheit (102, 2107) dazu ausgebildet ist, um ein während der Förderung eines Förderguts durch die erste Förderzone (100, 2100) erfasstes Fördersignal aus der ersten Förderzone zu empfangen, das Fördersignal zu verarbeiten und daraus einen das Förderverhalten dieses Förderguts in der ersten Förderzone beschreibenden ersten Fördergutparameter zu ermitteln und diesen ersten Fördergutparameter über die Signalübermittlungsstrecke (70) an die zweite Steuerungseinheit (202, 2108) zu übermitteln, und
- die zweite Steuerungseinheit (202, 2108) dazu ausgebildet ist, um über die Signalübermittlungsstrecke (70) den ersten Fördergutparameter von der ersten Steuerungseinheit (102, 2107) zu empfangen und um zumindest einen der zweiten Förderparameter in Abhängigkeit dieses ersten Fördergutparameters einzustellen und das Fördergut mit diesem zweiten Förderparameter in der zweiten Förderzone (200, 2200) zu fördern;
**dadurch gekennzeichnet,**
**dass** die zweite Steuerungseinheit ausgebildet ist, um den zweiten Förderparameter so einzustellen, dass ein Schlupf zwischen dem zweiten Förderantrieb und dem Fördergut in der zweiten Förderzone geringer ist als ein Schlupf zwischen dem ersten Förderantrieb und dem Fördergut in der ersten Förderzone.

2. Fördervorrichtung nach Anspruch 1, **dadurch gekennzeichnet, dass** das Fördersignal ein Antriebssignal von dem ersten Förderantrieb umfasst, insbesondere ausgewählt aus:
- einer maximalen Drehzahl des Förderantriebs,
- einer durchschnittlichen Drehzahl des Förderantriebs,
- einer Drehzahländerungsrate über die Zeit,
- einer Drehzahländerungsratengeschwindigkeit über die Zeit,
- einer maximalen Antriebsenergie des Förderantriebs,
- einer durchschnittlichen Antriebsenergie des Förderantriebs,
- einer Änderungsrate der Antriebsenergie des Förderantriebs über die Zeit,
- einer Änderungsratengeschwindigkeit der Antriebsenergie des Förderantriebs über die Zeit.

3. Fördervorrichtung nach einem der vorhergehenden Ansprüche, **dadurch gekennzeichnet, dass**
die erste Förderzone einen Fördersensor umfasst, der ausgebildet ist zur Erfassung einer Position, Geschwindigkeit und/oder Beschleunigung des Förderguts in der ersten Förderzone, und
der erste Förderparameter ein
- die Position,
- die Geschwindigkeit und/oder
- die Beschleunigung
des Förderguts in der ersten Förderzone beschreibendes Sensorsignal umfasst.

4. Fördervorrichtung nach einem der vorhergehenden Ansprüche, **dadurch gekennzeichnet, dass**
die erste Steuerungseinheit ausgebildet ist, um den ersten Fördergutparameter an die zweite Steuerungseinheit zu übermitteln, bevor das Fördergut die erste Förderzone vollständig verlassen hat.

5. Verfahren zur Steuerung einer Fördervorrichtung zur Förderung von Fördergütern entlang einer Förderstrecke, mit den Schritten:
- Fördern des Förderguts (40) durch eine erste Förderzone (100, 2100) , die einen ersten Teilabschnitt der Förderstrecke darstellt, mittels eines ersten Förderantriebs (101, 2101),
- hierauf folgend Fördern des Förderguts (40) durch eine zweite Förderzone (200, 2200), die einen zweiten Teilabschnitt der Förderstrecke darstellt, mittels eines zweiten Förderantriebs (201, 2201),
- Erfassen eines ersten Förderparameters in einer ersten Steuerungseinheit (102, 2107), welche den ersten Förderantrieb (101, 2101) ansteuert,
- Ermitteln eines ersten Fördergutparameters aus dem ersten Förderparameter, umfassend die Schritte
- Einstellen eines zweiten Förderparameters, ausgewählt aus:
- zweiter Fördergeschwindigkeit,
- zweiter Förderbeschleunigung oder -verzögerung
- zweiter Förderdauer
in Abhängigkeit des ersten Fördergutparameters und Ansteuern des zweiten Förderantriebs (201, 2201) mit dem zweiten Förderparameter;
**gekennzeichnet durch** den Schritt:
- Einstellen des zweiten Förderparameters so, dass ein Schlupf zwischen dem zweiten Förderantrieb und dem Fördergut in der zweiten Förderzone geringer ist als ein Schlupf zwischen dem ersten Förderantrieb und dem Fördergut in der ersten Förderzone.

6. Verfahren nach Anspruch 5, **dadurch gekennzeichnet, dass** im ersten Fördergutparameter
- eine Länge des Förderguts in einer sich entlang der Förderstrecke erstreckenden Richtung,
- eine Masse oder Gewichtskraft des Förderguts, und/oder
- einen Reibungskoeffizienten zwischen einer Auflagefläche des Förderguts auf dem ersten oder zweiten Förderantrieb und dem ersten oder zweiten Förderantrieb beschrieben wird.

7. Verfahren nach einem der Ansprüche 5 oder 6, **gekennzeichnet durch**
- Übermitteln des ersten Fördergutparameters an eine Vielzahl von Steuerungseinheiten zur Ansteuerung von Förderantrieben einer Vielzahl von Förderzonen in der Förderstrecke,
- jeweils Einstellen eines Förderparameters in den Steuerungseinheiten, und
- jeweils Ansteuern der Förderantriebe in den Förderzonen mit dem eingestellten Förderparameter.

## Claims

1. A conveying device for conveying conveyed materials (40) along a conveyor section, comprising
- a first conveying zone (100, 2100) which constitutes a first subsection of the conveyor section and which has a first conveyor drive (101, 2101) for generating a driving or braking force on a conveyed material (40) located in the first conveying zone,
- a first control unit (102, 2107), which is connected in a signalling manner to the first conveyor drive (101, 2101) and is formed to activate the first conveyor drive (101, 2101) with first conveying parameters, selected from:
- first conveying speed,
- first conveying acceleration or deceleration,
- first conveying duration,
- a second conveying zone (200, 2200), which is arranged inside the conveyor section, downstream of the first conveying zone (100, 2100) and constitutes a second subsection of the conveyor section, and which has a second conveyor drive (201, 2201) for generating a driving or braking force on a conveyed material (40) located in the second conveying zone (200, 2200),
- a second control unit (202, 2108), which is connected in a signalling manner to the second conveyor drive (201, 2201) and is formed to activate the second conveyor drive (201, 2201) with second conveying parameters, selected from:
- second conveying speed,
- second conveying acceleration or deceleration,
- second conveying duration,
- a signal transmission section (70) between the first and the second control unit (102, 2107; 202, 2108),
wherein
- the first control unit (102, 2107) is formed to receive a conveying signal from the first conveying zone detected during the conveying of a conveyed material through the first conveying zone (100, 2100), to process the conveying signal and from that to determine a first conveyed material parameter describing the conveying behaviour of this conveyed material in the first conveying zone and to transmit this first conveyed material parameter to the second control unit (202, 2108) via the signal transmission section (70), and
- the second control unit (202, 2108) is designed to receive the first conveyed material parameter from the first control unit (102, 2107) via the signal transmission section (70) and to set at least one of the second conveying parameters depending on this first conveyed material parameter and to convey the conveyed material in the second conveying zone (200, 2200) using this second conveying parameter;
**characterized**
**in that** the second control unit is designed to set the second conveying parameter such that a slip between the second conveyor drive and the conveyed material in the second conveying zone is smaller than a slip between the first conveyor drive and the conveyed material in the first conveying zone.

2. The conveying device according to Claim 1, **characterized in that** the conveying signal comprises a drive signal from the first conveyor drive, in particular selected from:
- a maximum rotational speed of the conveyor drive,
- an average rotational speed of the conveyor drive,
- a rate of change of the rotational speed over time,
- a speed of rate of change of the rotational speed over time,
- a maximum driving power of the conveyor drive,
- an average driving power of the conveyor drive,
- a rate of change of the driving power of the conveyor drive over time,
- a speed of rate of change of the driving power of the conveyor drive over time.

3. The conveying device according to any one of the preceding claims, **characterized in that** the first conveying zone comprises a conveying sensor which is designed to detect a position, speed and/or acceleration of the conveyed material in the first conveying zone, and
the first conveying parameter comprises a sensor signal describing
- the position,
- the speed and/or
- the acceleration
of the conveyed material in the first conveying zone.

4. The conveying device according to any one of the preceding claims, **characterized in that** the first control unit is designed to transmit the first conveyed material parameter to the second control unit before the conveyed material has left the first conveying zone completely.

5. A method for controlling a conveying device for conveying conveyed materials along a conveyor section, having the steps:
- conveying the conveyed material (40) through a first conveying zone (100, 2100) which constitutes a first subsection of the conveyor section by means of a first conveyor drive (101, 2101),
- following this, conveying the conveyed material (40) through a second conveying zone (200, 2200) which constitutes a second subsection of the conveyor section by means of a second conveyor drive (201, 2201),
- detecting a first conveying parameter in a first control unit (102, 2107) which activates the first conveyor drive (101, 2101),
- determining a first conveyed material parameter from the first conveying parameter, comprising the steps
- setting a second conveying parameter, selected from:
- second conveying speed,
- second conveying acceleration or deceleration,
- second conveying duration
depending on the first conveyed material parameter and activating the second conveyor drive (201, 2201) using the second conveying parameter;
**characterized by** the step:
- setting the second conveying parameter such that a slip between the second conveyor drive and the conveyed material in the second conveying zone is smaller than a slip between the first conveyor drive and the conveyed material in the first conveying zone.

6. The method according to Claim 5, **characterized in that** by the first conveyed material parameter
- a length of the conveyed material in a direction extending along the conveyor section,
- a mass or weight of the conveyed material, and/or
- a coefficient of friction between a bearing surface of the conveyed material on the first or second conveyor drive and the first or second conveyor drive is described.

7. The method according to either of Claims 5 and 6, **characterized by**
- transmitting the first conveyed material parameter to a multiplicity of control units for activating conveyor drives of a multiplicity of conveying zones in the conveyor section,
- in each case setting a conveying parameter in the control units, and
- in each case activating the conveyor drives in the conveying zones using the set conveying parameter.

## Revendications

1. Dispositif de convoyage, destiné à convoyer des produits à convoyer (40) le long d'un trajet de convoyage, comprenant
- une première zone de convoyage (100, 2100), qui représente un premier tronçon partiel du trajet de convoyage et qui comporte un premier entraînement de convoyage (101, 2101), destiné à exercer une force d'entraînement ou de freinage sur un produit à convoyer (40) qui se trouve dans la première zone de convoyage,
- une première unité de commande (102, 2107), qui est en liaison par technique de signaux avec le premier entraînement de convoyage (101, 2101) et qui est conçue pour activer le premier entraînement de convoyage (101, 2101) avec des premiers paramètres de convoyage, sélectionnés parmi :
- la première vitesse de convoyage,
- la première accélération ou temporisation de convoyage
- la première durée de convoyage,
- une deuxième zone de convoyage (200, 2200), qui est placée à l'intérieur du trajet de convoyage, en aval de la première zone de convoyage (100, 2100) et qui représente un deuxième tronçon partiel du trajet de convoyage et qui comporte un deuxième entraînement de convoyage (201, 2201), destiné à exercer une force d'entraînement ou de freinage sur un produit à convoyer (40) qui se trouve dans la deuxième zone de convoyage (200, 2200),
- une deuxième unité de commande (202, 2108), qui est en liaison par technique de signaux avec le deuxième entraînement de convoyage (201, 2201) et qui est conçue pour activer le deuxième entraînement de convoyage (201, 2201) avec des deuxièmes paramètres de convoyage sélectionnés parmi :
- la deuxième vitesse de convoyage,
- la deuxième accélération ou temporisation de convoyage
- la deuxième durée de convoyage,
- un trajet de transmission de signaux (70) entre la première et la deuxième unité de commande (102, 2107 ; 202, 2108),
- la première unité de commande (102, 2107) étant conçue pour réceptionner à partir de la première zone de convoyage un signal de convoyage détecté pendant le convoyage d'un produit à convoyer à travers la première zone de convoyage (100, 2100), pour traiter le signal de convoyage et pour déterminer à partir de celui-ci un premier paramètre de produit à convoyer, décrivant le comportement au convoyage dudit produit à convoyer dans la première zone de convoyage et pour transmettre ledit premier paramètre de produit à convoyer par l'intermédiaire du trajet de transmission de signaux (70) à la deuxième unité de commande (202, 2108) et
- la deuxième unité de commande (202, 2108) étant conçue pour réceptionner par l'intermédiaire du trajet de transmission de signaux (70) le premier paramètre de produit à convoyer de la part de la première unité de commande (102, 2107) et pour régler au moins l'un des deuxièmes paramètres de convoyage en fonction dudit premier paramètre de produit à convoyer et pour convoyer le produit à convoyer avec ledit deuxième paramètre de convoyage dans la deuxième zone de convoyage (200, 2200) ; **caractérisé**
**en ce que** la deuxième unité de commande est conçue pour régler le deuxième paramètre de convoyage de telle sorte, qu'un glissement entre le deuxième entraînement de convoyage et le produit à convoyer dans la deuxième zone de convoyage soit inférieur à un glissement entre le premier entraînement de convoyage et le produit à convoyer dans la première zone de convoyage.

2. Dispositif de convoyage selon la revendication 1, **caractérisé en ce que** le signal de convoyage comprend un signal d'entraînement du premier entraînement de convoyage, sélectionné notamment parmi :
- un régime maximal de l'entraînement de convoyage,
- un régime moyen de l'entraînement de convoyage,
- un taux de variation du régime dans le temps,
- une vitesse du taux de variation du régime dans le temps,
- une énergie d'entraînement maximale de l'entraînement de convoyage,
- une énergie d'entraînement moyenne de l'entraînement de convoyage,
- un taux de variation dans le temps de l'énergie d'entraînement de l'entraînement de convoyage,
- une vitesse du taux de variation de l'énergie d'entraînement de l'entraînement de convoyage dans le temps.

3. Dispositif de convoyage selon l'une quelconque des revendications précédentes, **caractérisé en ce que**
la première zone de convoyage comprend un capteur de convoyage, qui est conçu pour détecter une position, une vitesse et / ou une accélération du produit à convoyer dans la première zone de convoyage et
le premier paramètre de convoyage comprend un signal de capteur décrivant
- la position,
- la vitesse et / ou
- l'accélération
du produit à convoyer dans la première zone de convoyage.

4. Dispositif de convoyage selon l'une quelconque des revendications précédentes, **caractérisé en ce que**
la première unité de commande est conçue pour transmettre le premier paramètre de produit à convoyer à la deuxième unité de commande, avant que le produit à convoyer n'ait totalement quitté la première zone de convoyage.

5. Procédé de commande d'un dispositif de convoyage, destiné à convoyer des produits à convoyer le long d'un trajet de convoyage, avec les étapes, consistant à :
- convoyer le produit à convoyer (40) à travers une première zone de convoyage (100, 2100), qui représente un premier tronçon partiel du trajet de convoyage, au moyen d'un premier entraînement de convoyage (101, 2101),
- suite à ce qui précède, convoyer le produit à convoyer (40) à travers une deuxième zone de convoyage (200, 2200), qui représente un deuxième tronçon partiel du trajet de convoyage, au moyen d'un deuxième entraînement de convoyage (201, 2201),
- détecter un premier paramètre de convoyage dans une première unité de commande (102, 2107), laquelle active le premier entraînement de convoyage (101, 2101),
- déterminer un premier paramètre de produit à convoyer à partir du premier paramètre de convoyage,
comprenant les étapes consistant à
- régler un deuxième paramètre de convoyage, sélectionné parmi
- la deuxième vitesse de convoyage,
- la deuxième accélération ou temporisation de convoyage
- la deuxième durée de convoyage
en fonction du premier paramètre de produit à convoyer et activer le deuxième entraînement de convoyage (201, 2201) avec le deuxième paramètre de convoyage ; **caractérisé par** l'étape consistant à
- régler le deuxième paramètre de convoyage, de telle sorte qu'un glissement entre le deuxième entraînement de convoyage et le produit à convoyer dans la deuxième zone de convoyage soit inférieur à un glissement entre le premier entraînement de convoyage et le produit à convoyer dans la première zone de convoyage.

6. Procédé selon la revendication 5, **caractérisé en ce que** dans le premier paramètre de produit à convoyer sont décrits
- une longueur du produit à convoyer dans une direction s'étendant le long du trajet de convoyage,
- une masse ou une force de poids du produit à convoyer et / ou
- un coefficient de frottement entre une surface d'appui du produit à convoyer sur le premier ou le deuxième entraînement de convoyage et le premier ou le deuxième entraînement de convoyage.

7. Procédé selon l'une quelconque des revendications 5 ou 6, **caractérisé par**
- la transmission du premier paramètre de produit à convoyer à une pluralité d'unités de commande, pour activer des entraînements de convoyage d'une pluralité de zones de convoyage dans le trajet de convoyage,
- chaque fois le réglage d'un paramètre de convoyage dans les unités de commande et
- chaque fois, l'activation des entraînements de convoyage dans les zones de convoyage avec le paramètre de convoyage réglé.
